# EUROPEAN PATENT SPECIFICATION

(11) **EP 1 703 071 B1**
(45) Date of publication and mention of the grant of the patent: **05.10.2011**
(21) Application number: 05101107.0
(22) Date of filing: 15.02.2005
(51) Int. Cl.: E06B 9/60, B60J 1/20, E06B 9/50

(54) **Winding mechanism for a roller screen and mounting means**
Aufrolleinrichtung für ein Rollo und Befestigung
Enrouleur de store et support

(43) Date of publication of application: 20.09.2006
(73) Proprietor: Hamstra B.V., 1311 XC Almere (NL)
(72) Inventor: Wilgehof, Bastiaan, 8224 CV, Lelystad (NL)
(74) Representative: Voncken, Bartholomeus Maria Ch.

(56) References cited:
- EP-A- 0 397 618
- EP-A- 0 701 039
- EP-A- 1 302 620
- CH-A5- 669 824

## Description

The invention firstly relates to a winding mechanism for a roller screen, comprising a housing, a winding tube for the roller screen rotatably mounted on a central shaft which has two opposite ends mounted in said housing by mounting means, and further comprising a spring means positioned between the winding tube and central shaft for preloading the winding tube.

In such a winding mechanism the preload of the winding tube will depend on several circumstances, such as for example the distance over which the roller screen will extend in its fully unwound position, the direction of movement of the roller screen (horizontally or vertically) and the amount of friction between the roller screen and guides provided therefore. Thus, generally it is mandatory that while assembling such a winding mechanism the amount of preload of the winding tube is adjusted in an appropriate manner. In a known winding mechanism, the central shaft is firstly rotated relative to the winding tube in a direction for establishing the desired preload before mounting the central shaft with winding tube into the housing. When the desired amount of preload has been reached, the central shaft is mounted in the housing while its rotational position is maintained.

It is a disadvantage of such a known winding mechanism, that preloading the central shaft (or, as a result, the winding tube) in the above manner and mounting the preloaded central shaft in the housing requires substantial skill and specialised tools. Moreover, during an extended use of a roller screen in which such a winding mechanism is provided, some properties of the roller screen will change, such as for example the friction occurring between the screen and guides therefore and the spring characteristic of the spring means. Therefore, for assuring a continued proper operation of the roller screen the preload of the winding tube sometimes has to be adjusted, which in the case of known winding mechanisms calls for disassembling the central shaft with winding tube from the housing and adjusting the rotational position of the central shaft relative to the winding tube. Of course such an operation is complicated and time-consuming.

Document EP-A-0-397 618 already describes a winding mechanism comprising a roller ('winding tube'), fixed part ('central shaft') and an elastic means ('spring means') acting on the roller and fixed to the fixed part.

It is an object of the present invention to provide an improved winding mechanism of the type referred to above.

Thus, in accordance with the present invention a winding mechanism for a roller screen is characterised in that at least one of said mounting means comprises a tubular member extending coaxially with and receiving a first end of the central shaft, wherein a first one of said tubular member and first end of the central shaft comprises at least one projection extending radially towards the second one of said tubular member and first end of the central shaft, whereas the second one is provided with a recess for housing said projection, which recess is substantially V-shaped with two legs ending in the tip of the V, which tip points substantially in a circumferential direction, wherein the central shaft has engaging means for applying thereto a force for rotating the central shaft, and wherein the central shaft is axially movable relative to the tubular member.

The cooperation between said projection and the V-shaped recess is such, that in a preloaded situation of the central shaft said projection rests in the tip of the V-shaped recess. When the engaging means of the central shaft are engaged (by an appropiate tool, for example) and the central shaft is rotated, the projection rides along one of the legs of the V and leaves the recess. After a desired rotation of the central shaft (during which the preload is adjusted as required), the projection is allowed (e.g. by an appropiate manipulation of the tool) to again enter the V-shaped recess and to come to a rest at the tip of said recess. During such a rotational movement of the central shaft it also will shift axially to and fro.

As a result, the preload of the winding mechanism can be adjusted without disassembling the winding mechanism.

In a preferred embodiment of the winding mechanism in accordance with the present invention the V-shaped recess is asymmetrical in such a manner that with the projection initially positioned at the tip of the V-shaped recess a relative rotation between the tubular member and the central shaft will position the projection always in the same one of said legs of the recess.

This means, that it is always assured that during a rotation for adjusting the preload between the central shaft and winding tube the axial movement of the central shaft always will be in the same direction. This, for example, may be advantageous when the spring means, apart from its rotational preload, also acts in an axial direction on the central shaft, in which case the asymmetrical shape of the V-shaped recess will be such, that the axial movement of the central shaft will be opposite to said axial force of the spring means. In such a manner it can be assured that the projection, after being moved out of the recess for a rotation of the central shaft (for adjusting the preload, as explained above), will again be forced into the recess after said rotation of the central shaft has been completed.

Preferably there are a number of circumferentially regularly spaced projections and/or a number of circumferentially regularly spaced recesses. For example there may be a number of three circumferentially regularly spaced projections and an equal number of circumferentially regularly spaced recesses. However, it is also possible that the number of projections differs from the number of recesses.

Further, in a preferred embodiment of the winding mechanism the engaging means comprise a slot in a frontal face of the central shaft for receiving a tool, such as the tip of a screwdriver. As a result, a simple tool, such as a screwdriver, may be used for adjusting the preload of the winding mechanism. Said frontal face of the central shaft is easily accessible from the outside of the housing, also when the winding mechanism is assembled.

Because the recess is shaped as a V-shaped recess, it is also possible to manipulate the projection out of said recess in an opposite sense compared to the direction in which it is moved out for increasing the preload of the winding mechanism. Such a direction in the opposite sense may be used during reducing the preload of the winding mechanism. For example, when the engaging means, as mentioned above, comprise a slot in a frontal face of the central shaft, a screwdrivers tip may be pushed against said slot in such a manner that the central shaft, while rotating it, is moved further into the housing until the projection has left the V-shaped recess entirely. While still pushing the projection out of reach of the V-shaped recess the central shaft then can be rotated for reducing the preload, after which the screwdriver is withdrawn and the projection again enters the V-shaped recess.

It is noted that such an operation, of course, also could be used for increasing the preload of the winding mechanism.

For the provision of the projections and recesses basically two possibilities exist: it is possible that the projection(s) is(are) defined on the central shaft, whereas the V-shaped recess(es) is(are) defined in the tubular member, or it is possible that the V-shaped recess(es) is(are) defined in the central shaft, whereas the projection(s) is(are) defined on the tubular member.

When, in accordance with yet another embodiment of the winding mechanism according to the present invention, the mounting means comprising said projection(s) and recess(es) only are provided at said first end of the central shaft, wherein the second end of the central shaft is mounted in the housing in a manner for moving freely axially and rotatably, the operation of the winding mechanism is extremely simple, because only one end of the central shaft has to be manipulated. Providing mounting means comprising said projection(s) and recess(es) at both ends of the central shaft generally would mean, that both mounting means would have to be manipulated simultaneously, which is very awkward.

The invention further relates to a mounting means.

Hereinafter the invention will be elucidated while referring to the drawing, in which embodiments of the winding mechanism according to the present invention are illustrated.
Figure 1 shows, in an axial cross section and schematically, a winding mechanism for a roller screen;
figure 2 shows, on a reduced scale and perspectively, part of the winding mechanism of figure 1, disassembled;
figure 3 shows detail A of figure 2 on a larger scale;
figures 4 -7 show different positions of a mounting means, and
figure 8 shows an alternative embodiment of a mounting means.

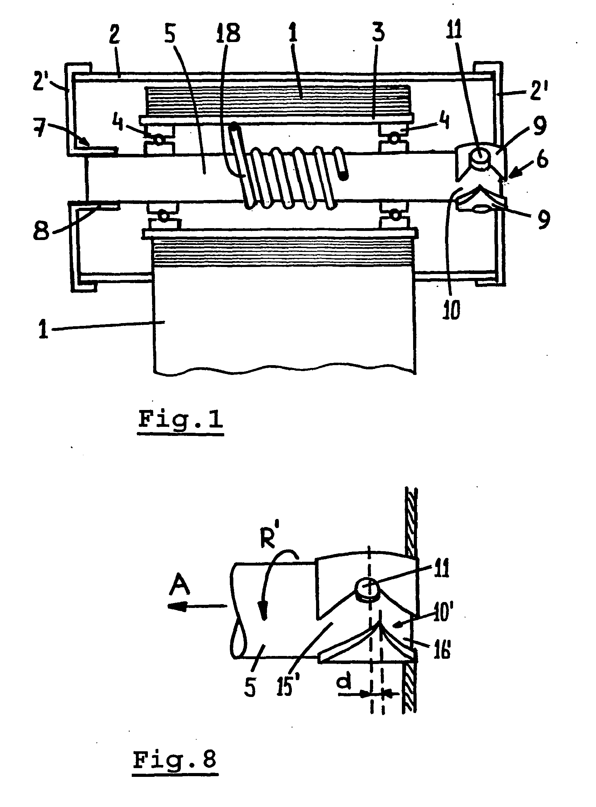

Firstly referring to figure 1, a winding mechanism for a roller screen 1 is illustrated. Such a winding mechanism basically comprises a housing 2, a winding tube 3 for the roller screen 1, which winding tube is rotatably mounted (by means of bearings 4) on a central shaft 5. The central shaft is mounted in the housing 5 by mounting means 6 and 7. Further a spring means 18 is positioned between the winding tube 3 and central shaft 5 for preloading the winding tube 3 (generally in a rotational sense for winding the roller screen 1 thereon).

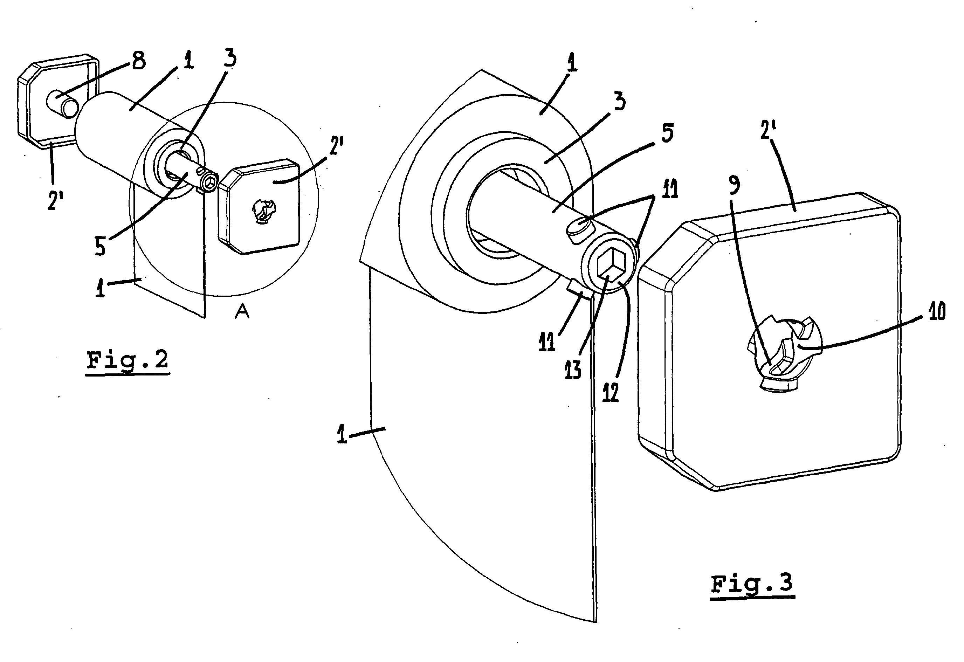

Figure 2 shows the winding mechanism disassembled. Part of the housing has been removed, and only two end parts 2' thereof have been illustrated. One of said end parts 2' comprises a tubular member 8 in which the central shaft 5 is housed in such a manner that it can move freely axially and rotatably. The combination of said tubular member 8 and central shaft 5 defines the mounting means 7. The opposite end part 2' (illustrated on a larger scale in figure 3) also comprises a tubular member 9 in which three circumferentially regularly spaced V-shaped recesses 10 are provided (only one of which is clearly visible). The central shaft 5 correspondingly comprises three circumferentially regularly spaced projections 11 extending radially outwards from said central shaft 5. The combination of tubular member 9 with the central shaft 5 defines the mounting means 6.

Further the frontal face 12 of the central shaft 5 is provided with a slot or depression 13 for receiving a mating tool, such as for example the tip of a screwdriver or alike.

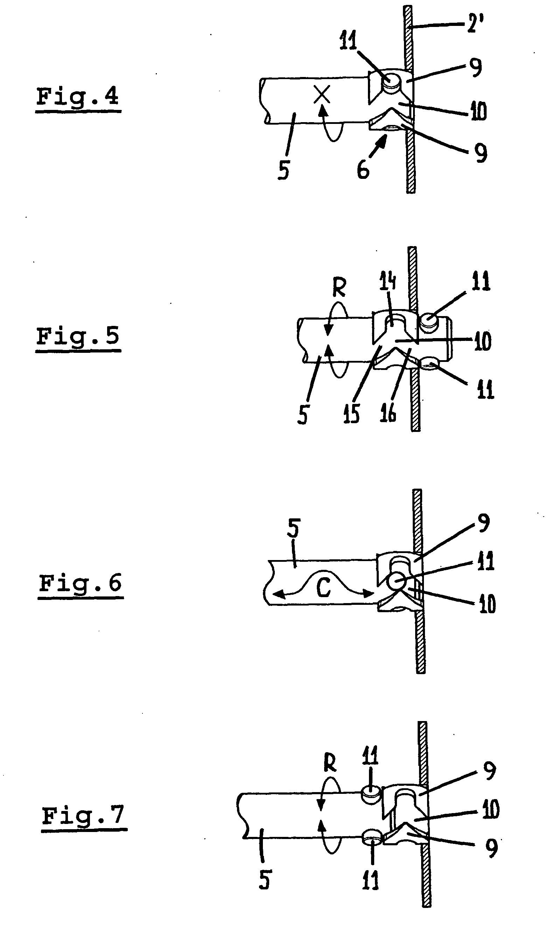

Referring to figures 4 -7, the operation of the winding mechanism, and especially the mounting means 6 thereof, will be elucidated.

In figure 4 the projections 11 of the central shaft 5 each are housed in the assigned V-shaped recesses 10. Also referring to figure 5, it is clearly evident that in the situation according to figure 4 each projection 11 rests at the tip 14 of the respective recess 10, where two legs 15 and 16 of the V-shaped recess meet. A rotation of the central shaft 5 in accordance with arrow X in figure 4 (e.g. under influence of a preload acting between the winding tube and central shaft) thus will be prevented, because the cooperation between the tip of the V-shaped recesses and the projections 11 will avoid such a rotation.

When, in accordance with figure 5, the projections 11 of the central shaft 5 are positioned outside of the V-shaped recesses 10 (which situation can be achieved by engaging the slot or depression 13 with a tool and thus manipulating the central shaft such that the projections 11 are moved through the respective leg of the recess outwardly), a rotation in accordance with arrow R of the central shaft is possible. Such a rotation, for example, may be generated by using a tool which is introduced into the slot/depression 13 in the frontal face 12 of the central shaft 5. In such a manner the preload, defined by the spring means 18 between the central shaft 5 and winding tube 3, can be adjusted.

After the required adjustment has been realised, the projections 11 again can be introduced into the V-shaped recesses 10 (e.g. by manipulation through said screwdriver), and the situation according to figure 4 is established again, but now with a different preload in the winding mechanism.

In figure 6 the curved arrow C indicates the movement of the central shaft 5 when its projections 11 are moved through the V-shaped recess 10 from the position shown in figure 5 towards a position shown in figure 7, in which latter position again a rotation according to R of the central shaft 5 is possible. Such a rotation R can be used for increasing or diminishing the preload of the winding mechanism.

During the movements of the central shaft 5 illustrated in figures 4-7 the opposite end of the central shaft 5 will move freely in the tubular member 8 at the other end of the housing (illustrated in figure 2).

Of course it also is possible, that the projections 11 are provided on the tubular member 9 of the housing 2, whereas corresponding V-shaped recesses are defined in the central shaft 5.

Whereas in the previous embodiments the V-shaped recesses 10 are symmetrical, in the embodiment shown in figure 8 the V-shaped recess 10' is asymmetrical, because the position of the tip of the V-shaped recess and the position where both legs 15' and 16' meet are off set by a distance d. The result is that, when a projection 11 initially is positioned at the tip of the V-shaped recess 10, a rotation according to arrow R' in figure 8 will always automatically position the projection 11 in the leg 15' of the V-shaped recess 10'(and thus not in the leg 16'), which will lead to a predetermined axial movement of the shaft 5 according to arrow A. This means that, when applying a rotational force onto the shaft (for example by using a tool engaging a slot/depression 13), always the same axial movement of the shaft 5 will occur, preferably opposite to an axial preload of the spring means 18.

The invention is not limited to the embodiment described before which may be varied widely within the scope of the invention as defined by the appending claims.

## Claims

1. Winding mechanism for a roller screen (1), comprising a housing (2), a winding tube (3) for the roller screen rotatably mounted on a central shaft (5) which has two opposite ends mounted in said housing by mounting means (6, 7), and further comprising a spring, means (18) positioned between the winding tube (3) and central shaft (5) for preloading the winding tube,
**characterized in that**
at least one of said mounting means comprises a tubular member (9) extending coaxially with and receiving a first end of the central shaft (5), wherein a first one of said tubular member (9) and first end of the central shaft (5) comprises at least one projection (11) extending radially towards the second one of said tubular member and first end of the central shaft,
whereas the second one is provided with a recess (10) for housing said protection, which recess is substantially V-shaped with two legs (15, 16) ending in the tip (14) of the V, which tip points substantially in a circumferential direction, wherein the central shaft (5) has engaging means (13) for applying thereto a force for rotating the central shaft, and wherein the central shaft is axially movable relative to the tubular member (9),

2. Winding mechanism according to claim 1, wherein the V-shaped recess (10') is asymmetrical in such a manner that with the projection (11) initially positioned at the tip (14) of the V-shaped recess a relative rotation between the tubular member (9) and the central shaft (5) will position the projection always in the same one (15') of said legs (15', 16') of the recess (10').

3. Winding mechanism according to claim 1 or 2, wherein there are a number of circumferentially regularly spaced projections (11) and/or a number of circumferentially regularly spaced recesses (10).

4. Winding mechanism according to any of the previous claims, wherein the engaging means (13) comprise a slot in a frontal face (12) of the central shaft (5) for receiving a tool, such as the tip of a screwdriver.

5. Winding mechanism according to any of the previous claims, wherein the projections(s) (11) is(are) defined on the central shaft (5), whereas the V-shaped recess(es) (10) is(are) defined in the tubular member (9).

6. Winding mechanism according to any of the claims 1-4, wherein the V-shaped recess(es) (10) is (are) defined in the central shaft (5), whereas the projection(s) (11) is(are) defined on the tubular member (9).

7. Winding mechanism according to any of the previous claims, wherein mounting means comprising said projection (11) and recess (10) only are provided at said first end of the central shaft (5), wherein the second end of the central shaft (5) is mounted in the housing (2) in a manner for moving freely axially and rotatably.

8. Mounting means for a winding mechanism for a roller screen according to the preamble of claim 1, **characterized in** presenting all the features of the mounting means disclosed in any of the previous claims and being thus constructed and evidently intended for use in the winding mechanism as claimed in any of the previous claims.

## Patentansprüche

1. Wickelmechanismus für eine Rollblende (1), aufweisend ein Gehäuse (2), ein Nickelrohr (3) für die Rollblende, das drehbar an einer zentralen welle (5) montiert ist, die zwei mittels Montagemitteln (6, 7) in dem Gehäuse montierte entgegengesetzte Enden aufweist, und ferner ein Federmittel (18) aufweisend, das zwischen dem Wickelrohr (3) und der zentralen welle (5) angeordnet ist, um das Nickelrohr vorzuspannen,
**dadurch gekennzeichnet, dass**
mindestens eines der Montagemittel ein rohrförmiges Element (9) aufweist, das sich koaxial zu einem ersten Ende der zentralen Welle (5) erstreckt und diese aufnimmt, wobei ein erstes von dem rohrförmigen Element (9) und dem ersten Ende der zentralen Welle (5) mindestens einen Vorsprung (11) aufweist, der sich radial in Richtung zu dem zweiten von dem rohrförmigen Element und dem ersten Ende der zentralen welle erstreckt,
wohingegen das zweite mit einer Aussparung (10) versehen ist, um den Vorsprung aufzunehmen, wobei die Aussparung im Wesentlichen V-förmig ist, wobei zwei Schenkel (15, 16) in der Spitze (14) des V enden, wobei die Spitze im Wesentlichen in eine Umfangsrichtung zeigt, wobei die zentrale Meile (5) Eingriffsmittel (13) aufweist, um zum Drehen der zentralen Welle eine Kraft darauf aufzubringen, und wobei die zentrale welle bezüglich des rohrförmigen Elements (9) azial bewegbar ist.

2. wickelmechanismus gemäß Anspruch 1, wobei die V-förmige Aussparung (10) derart asymmetrisch ist, dass, wenn der Vorsprung (11) anfangs an der Spitze (14) der V-förmigen Aussparung positioniert ist, eine relative Drehung zwischen dem rohrförmigen Element (9) und der zentralen Welle (5) den Vorsprung immer in demselben (15') der Schenkel (15', 16') der Aussparung (10') positionieren wird.

3. Wickelmechanismus gemäß Anspruch 1 der 2, wobei eine Anzahl von entlang dem Umfang in regelmäßigen Abständen angeordneten Vorsprüngen (11) und/oder eine Anzahl von entlang dem Umfang in regelmäßigen Abständen angeordneten Aussparungen (10) vorgesehen sind/ist.

4. Wickelmechanismus gemäß irgendeinem der vorhergehenden Ansprüche, wobei die Eingriffsmittel (13) in einer Stirnseite (12) der zentralen Welle (5) einen Schlitz aufweisen, um ein Werkzeug, zum Beispiel die Spitze eines Schraubendrehers aufzunehmen.

5. wickelmechanismus gemäß irgendeinem der vorhergehenden Ansprüche, wobei der Vorsprung (die Vorsprünge) (11) an der zentralen Welle (5) definiert ist (sind), wohingegen die V-förmige (n) Aussparung(en) (10) in dem rohrförmigen Element (9) definiert ist (sind).

6. Wickelmechanismus gemäß irgendeinem der Ansprüche 1 bis 4, wobei die V-förmige (n) Aussparung(en) (10) in der zentralen Welle (5) definiert ist (sind), wohingegen der Vorsprung (die Vorsprünge) (11) an dem rohrförmigen Element (9) definiert ist (sind).

7. Wickelmechanismus gemäß irgendeinem der vorhergehenden Ansprüche, wobei Montagemittel, die den Vorsprung (11) und die Aussparung (10) aufweisen, nur an dem ersten Ende der zentralen Welle (5) vorgesehen sind, wobei das zweite Ende der zentralen Welle (5) in dem Gehäuse (2) montiert ist, um sich frei axial und drehbar zu bewegen.

8. Montagemittel für einen Wickelmechanismus für eine Rollblende gemäß dem Oberbegriff von Anspruch 1, **dadurch gekennzeichnet, dass** sie sämtliche Merkmale der Montagemittel aufweisen, die in irgendeinem der vorhergehenden Ansprüche offenbart sind, und dass sie derart aufgebaut und offensichtlich für die Verwendung in dem Wickelmechanismus gemäß irgendeinem der vorhergehenden Ansprüche vorgesehen sind.

## Revendications

1. Mécanisme d'enroulement pour un store déroulable (1), comprenant une logement (2), un tube d'enroulement (3) pour le store déroulable monté de manière rotative sur un arbre central (5) qui a deux extrémités opposées montées dans ledit logement à l'aide de moyens de montage (6, 7), et comprenant en outre un moyen formant ressort (18) positionné entre le tube d'enroulement (3) et l'arbre central (5) pour précharger le tube d'enroulement,
**caractérisé en ce que**
au moins l'un desdits moyens de montage comprend un élément tubulaire (9) s'étendant de manière coaxiale avec une première extrémité de l'arbre central (5) et recevant celle-ci, dans lequel un premier élément parmi ledit élément tubulaire (9) et ladite première extrémité de l'arbre central (5) comprend au moins une saillie (11) s'étendant radialement en direction du deuxième élément parmi ledit élément tubulaire et ladite première extrémité de l'arbre central,
tandis que le deuxième élément est pourvu d'un évidement (10) pour recevoir ladite saillie, ledit évidement est sensiblement en forme de V avec deux jambes (15, 16) se terminant dans la pointe (14) du V, ladite pointe pointant sensiblement dans une direction périphérique, dans lequel l'arbre central (5) comprend un moyen d'accouplement (13) pour lui appliquer une force permettant de faire tourner l'arbre central, et dans lequel l'arbre central peut se déplacer axialement par rapport à l'élément tubulaire (9).

2. Mécanisme d'enroulement selon la revendication 1, dans lequel l'évidement en forme de V (10) est asymétrique de telle sorte que lorsque la saillie (11) est positionnée au départ sur la pointe (14) de l'évidement en forme de V, une rotation relative entre l'élément tubulaire (9) et l'arbre central (5) positionne toujours la saillie dans la même (15') desdites jambes (15', 16') de l'évidement (10').

3. Mécanisme d'enroulement selon la revendication 1 ou 2, dans lequel il y a un certain nombre de saillies (11) régulièrement, espacées sur la circonférence et/ou un certain nombre d'évidements (10) régulièrement espacés sur la circonférence.

4. Mécanisme d'enroulement selon l'une quelconque des revendications précédentes, dans lequel le moyen d'accouplement (13) comprend une rente dans une face avant (12) de l'arbre central (5) pour recevoir un outil, comme la pointe d'un tournevis.

5. Mécanisme d'enroulement selon l'une quelconque des revendications précédentes, dans lequel la ou les saillies (11) sont définies sur l'arbre central (5), tandis que le ou les évidements en forme de V (10) sont définis dans l'élément tubulaire (9).

6. Mécanisme d'enroulement selon l'une quelconque des revendications précédentes, dans lequel le ou les évidements en forme de V (10) sont définis dans l'arbre central (5), tandis que la ou les saillies (11) sont définies sur l'élément: tubulaire (9).

7. Mécanisme d'enroulement selon l'une quelconque des revendications précédentes, dans lequel les moyens de montage comprenant ladite saillie (11) et ledit évidement (10) uniquement sont placés sur ladite première extrémité de l'arbre central (5), dans lequel la deuxième extrémité de l'arbre central (5) est montée dans le logement (2) de manière à se déplacer librement axialement et en rotation.

8. Moyens de montage pour un mécanisme d'enroulement pour un store déroulable selon le préambule de la revendication 1, **caractérisés en ce qu'**ils présentent toutes les caractéristiques des moyens de montage décrits dans l'une quelconque des revendications précédentes et construits et prévus de manière évidente pour être utilisés dans le mécanisme d'enroulement selon l'une quelconque des revendications précédentes.
